# EUROPEAN PATENT SPECIFICATION

(11) **EP 3 477 755 B1**
(45) Date of publication and mention of the grant of the patent: **22.09.2021**
(21) Application number: 17820462.4
(22) Date of filing: 21.06.2017
(51) Int. Cl.: H01M 10/04, H01M 10/052, H01M 10/0583

(54) **STACKING DEVICE FOR SECONDARY BATTERY, STACKING METHOD USING SAME, AND SECONDARY BATTERY OBTAINED THEREBY**
STAPELVORRICHTUNG FÜR SEKUNDÄRBATTERIE, STAPELVERFAHREN DAMIT UND DAMIT HERGESTELLTE SEKUNDÄRBATTERIE
DISPOSITIF D'EMPILAGE POUR BATTERIE SECONDAIRE, PROCÉDÉ D'EMPILAGE L'UTILISANT ET BATTERIE SECONDAIRE AINSI OBTENUE

(30) Priority: 27.06.2016 KR 20160080100; 16.06.2017 KR 20170076751
(43) Date of publication of application: 01.05.2019
(73) Proprietor: Samsung SDI Co., Ltd, Gyeonggi-do 17084 (KR)
(72) Inventor: CHO, Jae Kyung, Yongin-si Gyeonggi-do 17084 (KR); JOO, Hyun Sang, Yongin-si Gyeonggi-do 17084 (KR); CHOI, Chan Jin, Yongin-si Gyeonggi-do 17084 (KR); HEO, Kyoung Heon, Yongin-si Gyeonggi-do 17084 (KR); KI, Dae Wook, Yongin-si Gyeonggi-do 17084 (KR); KIM, Gi Sung, Yongin-si Gyeonggi-do 17084 (KR)
(74) Representative: Gulde & Partner
(86) International application number: PCT/KR2017/006524
(87) International publication number: WO 2018/004185

(56) References cited:
- JP-A- H1 079 254
- JP-A- 2014 067 542
- KR-A- 20110 048 839
- KR-A- 20120 099 345
- KR-A- 20150 021 069
- US-A1- 2011 104 567
- US-A1- 2011 143 189
- US-A1- 2012 189 894

## Description

### [Technical Field]

Various embodiments of the present invention relate to a stacking device for a secondary battery, a stacking method using the same, and a secondary battery obtained thereby.

### [Background Art]

In general, unlike a primary battery that cannot be charged, a secondary battery can be charged and discharged. A low-capacity secondary battery packaged in the form of a pack comprised of one single cell is used as the power source for various portable small-sized electronic devices, such as cellular phones, and camcorders. A high-capacity secondary battery in which several tens of cells are connected in a battery pack is used as the power source for motor drives, such as those in electric bicycles, electric scooters, hybrid vehicles, or electric vehicles.

A secondary battery is configured such that an electrode assembly including a positive electrode plate, a negative electrode plate and a separator sequentially stacked one on another is accommodated in a case with an electrolyte solution. The electrode assembly is largely classified into a jelly-roll type (wound) electrode assembly in which long sheet-like positive and negative electrode plates with a separator interposed therebetween are wound, and a stacked electrode assembly in which multiple positive and negative electrode plates are sequentially stacked with each separator interposed therebetween. The jelly-roll type electrode assembly is typically used for a small-sized secondary battery and the stacked electrode assembly is typically used for a medium-/large-sized secondary battery having a larger electric capacity. Document US 2011/104567 discloses a secondary battery comprising a stack of electrodes and separators, which has a folding region.

### [Technical Problems to be Solved]

Various embodiments of the present invention provide a stacking device for a secondary battery configured to stack electrode plates at a high rate, a stacking method using the same, and a secondary battery obtained thereby.

### [Technical Solutions]

The present invention is defined by the features of claims 1, 9 and 14, and relates to a stacking device for a secondary battery. In accordance with various embodiments of the present invention, the above and other objects can be accomplished by providing a stacking device for a secondary battery, the stacking device including a first electrode plate bonded body supply portion for supplying a first electrode plate bonded body comprising a first electrode plate, which comprises a first electrode first coating portion and a first electrode second coating portion positioned to be spaced apart from the first electrode first coating portion, and separators stacked on both surfaces of the first electrode plate, a second electrode plate supply portion for arranging a second electrode first coating portion and a second electrode second coating portion of a second electrode on both surfaces of the first electrode first coating portion of the first electrode plate bonded body, respectively, thereby forming a unit cell, and a folding portion for folding the first electrode plate bonded body, which has the unit cell formed thereon, such that the second electrode first coating portion or the second electrode second coating portion of the second electrode plate faces the first electrode second coating portion of the first electrode plate, thereby forming a stack.

The stacking device may further include a first electrode plate supply portion for supplying the first electrode plate to the first electrode plate bonded body supply portion, and a separator supply portion for supplying the separators to the first electrode plate bonded body supply portion, wherein the first electrode plate bonded body supply portion is stacked by arranging the first electrode plate and the separators.

The first electrode plate of the first electrode plate bonded body may be supplied in a continuous form, and the second electrode plate may be cut to have a predefined length to then be arranged on both surfaces of the first electrode plate bonded body.

The first electrode plate may be cut to have a predefined length to then be supplied in an independent form, and the second electrode plate may be cut to have a predefined length to then be arranged on both surfaces of the first electrode plate bonded body.

The stacking device further includes a separator bonding portion for bonding separator regions corresponding to edges of the first electrode plate in the separators positioned on both surfaces of the first electrode plate.

The folding portion may include a gripper for pressing the second electrode plate arranged on both surfaces of the first electrode plate bonded body to fix the second electrode plate to the first electrode plate bonded body, the gripper fixed to the unit cell and folding the first electrode plate bonded body.

The folding portion may include a first folding portion and a second folding portion, and the first folding portion and the second folding portion may alternately fold the first electrode plate bonded body, which has the unit cell formed thereon, thereby forming the cell stack.

The stacking device may further include a fixing portion for pressing and fixing the cell stack during the folding operation performed by the folding portion.

The first electrode plate may have a region corresponding to a curved portion of the cell stack, the region from which an active material is removed.

In accordance with various embodiments of the present invention, the above and other objects can be accomplished by providing a stacking method for a secondary battery, the stacking method including a first electrode plate bonded body supplying step of supplying a first electrode plate bonded body comprising a first electrode plate including a first electrode first coating portion and a first electrode second coating portion positioned to be spaced apart from the first electrode first coating portion, and separators stacked on both surfaces of the first electrode plate, a second electrode plate supplying step of arranging a second electrode first coating portion and a second electrode second coating portion of a second electrode plate on both surfaces of the first electrode first coating portion of the first electrode plate bonded body, respectively, thereby forming a unit cell, and a folding step of folding the first electrode plate bonded body, which has the unit cell formed thereon, such that the second electrode first coating portion or the second electrode second coating portion of the second electrode plate faces the first electrode second coating portion of the first electrode plate, thereby forming a cell stack.

The first electrode plate bonded body supplying step may include a first electrode plate supplying step of supplying the first electrode plate, a separator supplying step of supplying separators to both surfaces of the first electrode plate, and a first electrode plate bonded body forming step of forming a first electrode plate bonded body by stacking the separators supplied to both surfaces of the first electrode plate.

The first electrode plate may be supplied in a continuous form in the first electrode plate bonded body supplying step, and the second electrode plate may be cut to have a predefined length to then be arranged on both surfaces of the first electrode plate bonded body in the second electrode plate supplying step.

The first electrode plate may be cut to have a predefined length to then be supplied in an independent form in the first electrode plate bonded body supplying step, and the second electrode plate may be cut to have a predefined length to then be arranged on both surfaces of the first electrode plate bonded body in the second electrode plate supplying step.

The stacking method further includes after the first electrode plate bonded body supplying step, a separator bonding step of bonding separator regions corresponding to edges of the first electrode plate in the separators positioned on both surfaces of the first electrode plate.

The first electrode plate of the first electrode plate supplying step may have a region corresponding to a curved portion of the cell stack, the region from which an active material is removed.

In accordance with various embodiments of the present invention, the above and other objects can be accomplished by providing a secondary battery including a first electrode plate first coating portion, a first electrode plate second coating portion, separators wrapping around the first electrode plate first coating portion and the first electrode plate second coating portion from their top and bottom portions, respectively, a second electrode plate first coating portion stacked while facing the first electrode plate first coating portion, and a first folding region formed by folding a region between the first electrode plate first coating portion and the first electrode plate second coating portion in a first direction, wherein the folded first electrode plate second coating portion is stacked while facing the second electrode plate first coating portion.

The secondary battery further includes a first bonding region formed by bonding the separators between the first electrode plate first coating portion and the first electrode plate second coating portion.

The secondary battery may further include a second electrode plate second coating portion stacked while facing the first electrode plate second coating portion.

The secondary battery may further include a first electrode plate third coating portion stacked while facing the second electrode plate second coating portion, and a second folding region formed by folding a region between the first electrode plate second coating portion and the first electrode plate third coating portion in a second direction, wherein the folded first electrode plate third coating portion is stacked while facing the second electrode plate second coating portion.

The secondary battery may further include a second bonding region formed by bonding the separators between the first electrode plate second coating portion and the first electrode plate third coating portion.

The first direction and the second direction may be different from each other.

The secondary battery may further include a second electrode plate third coating portion stacked while facing the first electrode plate third coating portion.

### [Advantageous Effects]

As described above, according to various embodiments of the present invention, there are provided a stacking device for a secondary battery, a stacking method using the same, and a secondary battery obtained thereby, the stacking device configured such that a first electrode plate bonded body is formed by stacking separators on bottom and top surfaces of a first electrode plate and a second electrode plate is arranged on bottom and top surfaces of the first electrode plate bonded body, thereby stacking four sheets of electrode plates at once by performing a sophisticated, one-time folding operation using a folding portion without changing base materials or further performing additional processes.

In addition, according to various embodiments of the present invention, there are provided a stacking device for a secondary battery, a stacking method using the same, and a secondary battery obtained thereby, the stacking device configured such that the first electrode plate and the second electrode plate, which are cut into individual units, are supplied, and specifically, separator regions corresponding to edges of the first electrode plate in the first and second separators positioned on both surfaces of the first electrode plate are bonded to each other, thereby preventing the first electrode plate from moving between two sheets of the separators and providing the secondary battery having excellent safety and reliability.

### [Brief Description of Drawings]

FIG. 1 is a perspective view of a stacking device for a secondary battery according to various embodiments of the present invention.
FIG. 2 is an enlarged view of a portion A shown in FIG. 1.
FIG. 3 shows a first electrode plate of the stacking device for a secondary battery according to various embodiments of the present invention.
FIGS. 4A to 4H sequentially show a folding operation of a stacking device for a secondary battery according to various embodiments of the present invention.
FIG. 5A is a flowchart of a stacking method using a stacking device for a secondary battery according to various embodiments of the present invention.
FIG. 5B is a flowchart of a first electrode plate bonded body supplying step in the stacking method using the stacking device for a secondary battery according to various embodiments of the present invention.
FIGS. 6A and 6B are a plan view and a side view of a stacking device for a secondary battery according to various embodiments of the present invention.
FIGS. 7A to 7F sequentially show a folding operation of a stacking device for a secondary battery according to various embodiments of the present invention.
FIG. 8 is a flowchart of a first electrode plate bonded body supplying step in a stacking method using a stacking device for a secondary battery according to various embodiments of the present invention.
FIG. 9 is a schematic view of a secondary battery according to various embodiments of the present invention.

### [Best Mode for Carrying Out the Invention]

Hereinafter, a preferred embodiment of the present invention will be described in detail.

In the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

In addition, throughout the specification, a first electrode plate can be referred to as a first electrode first coating portion or a first electrode plate first coating portion, a first electrode second coating portion or a first electrode plate second coating portion, or a first electrode third coating portion or a first electrode plate third coating portion. In addition, throughout the specification, a second electrode plate can be referred to as a second electrode first coating portion or a second electrode plate first coating portion, a second electrode second coating portion or a second electrode plate second coating portion, or a second electrode third coating portion or a second electrode plate third coating portion.

In addition, it may be described in the specification that a first electrode (plate) first coating portion or a first electrode (plate) second coating portion intervenes between a second electrode (plate) first coating portion and a second electrode (plate) second coating portion. Such a positional relationship between first and second electrode plates may be interpret as defined in the specification and/or drawings or as in modified forms.

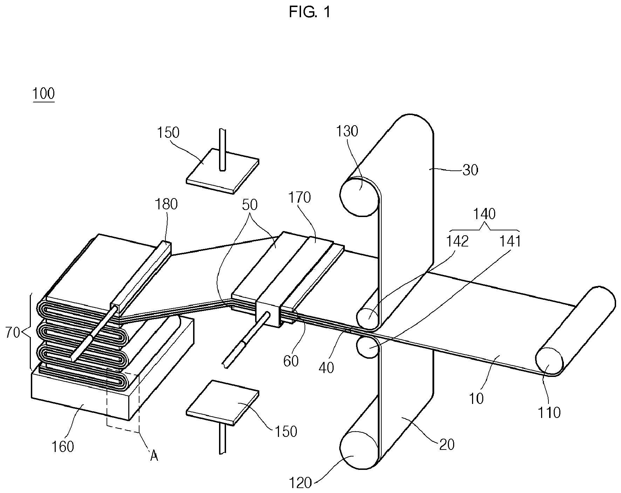

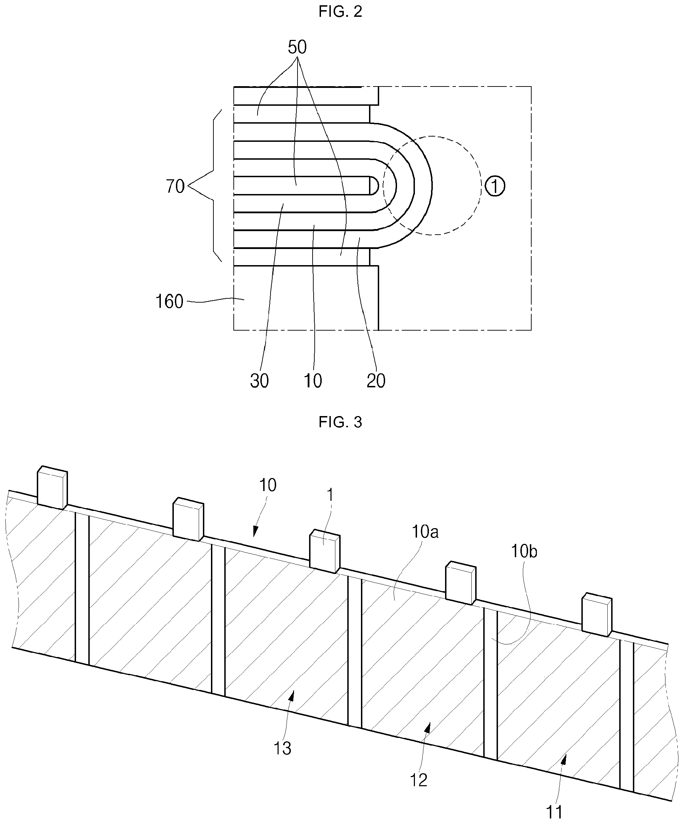

FIG. 1 is a perspective view of a stacking device for a secondary battery according to various embodiments of the present invention. FIG. 2 is an enlarged view of a portion A shown in FIG. 1. FIG. 3 shows a first electrode plate of the stacking device for a secondary battery according to various embodiments of the present invention.

As illustrated in FIG. 1, the stacking device 100 for a secondary battery according to various embodiments of the present invention may include a first electrode plate supply portion 110, a first separator supply portion 120, a second separator supply portion 130, a first electrode plate bonded body supply portion 140, a second electrode plate supply portion 150, a stacking portion 160, a folding portion 170, and a fixing portion 180.

The first electrode plate supply portion 110 may include a first electrode plate supply roll. The first electrode plate 10 is wound on the first electrode plate supply roll. In addition, as the first electrode plate supply roll rotates, the first electrode plate 10 is unwound to then be supplied to the first electrode plate supply portion 140. Therefore, the first electrode plate 10 is supplied to the first electrode plate supply portion 140.

In addition, the first electrode plate 10 may function as a positive electrode or a negative electrode. In addition, the first electrode plate 10 may include an active material layer formed on both surfaces thereof according to its polarity.

As illustrated in FIGS. 2 and 3, since the first electrode plate 10 is supplied in a continuous form, it constitutes a curved portion ① of a cell stack 70. The active material layer formed on both surfaces of the first electrode plate 10, which constitutes the curved portion ① of the first electrode plate 10 may fall off the first electrode plate 10.

The first electrode plate 10 may include an active material coating portion 10a and an active material non-coating (uncoated) portion 10b formed on both surfaces thereof, respectively. The active material non-coating portion 10b may be positioned at the curved portion ① of the cell stack 70 when the first electrode plate 10 is folded and stacked. That is to say, a plurality of active material non-coating portions 10b may be formed on both surfaces of the first electrode plate 10 to be spaced a predetermined interval apart from each other, so that they may also be positioned on other curved portions of the entire cell stack 70 including the curved portion ① shown in FIG. 2. The curved portion ① of the cell stack 70 is a portion where the second electrode plate 50 is not stacked and does not degrade the performance of the electrode assembly including the cell stack 70 even if the active material of the first electrode plate 10 is not formed.

In addition, the active material non-coating portion 10b may be formed to have a width larger than a circumferential length of the curved portion ①, thereby preventing the active material coating portion 10a from being positioned at the curved portion ① even by a mechanical error.

In addition, the active material non-coating portion 10b may be formed by forming the active material coating portion 10a on both surfaces of the first electrode plate 10 not on the active material non-coating portion 10b, or by partially removing the active material coating portion 10a.

Therefore, it is possible to prevent the active material from falling off the curved portion ① of the cell stack 70 by forming the active material non-coating portion 10b on the first electrode plate 10, thereby increasing the safety/reliability without lowering the performance of the secondary battery including the cell stack 70.

Meanwhile, an electrode tab 1 for electrically connecting the first electrode plate 10 to the outside may be formed at a top end of the first electrode plate 10.

The first separator supply portion 120 may include a first separator supply roll. A first separator 20 is wound on the first separator supply roll. In addition, as the first separator supply roll rotates, the first separator 20 is unwound to then be supplied to the first electrode plate supply portion 140. Therefore, the first separator 20 is supplied in a continuous form to then be stacked.

The second separator supply portion 130 may include a second separator supply roll. A second separator 30 is wound on the second separator supply roll. In addition, as the second separator supply roll rotates, the second separator 30 is unwound to then be supplied to the first electrode plate supply portion 140. Therefore, the second separator 30 is supplied in a continuous form to then be stacked.

The first electrode plate bonded body supply portion 140 may include a first guide roll 141 and a second guide roll 142.

The first electrode plate 10, the first separator 20 and the second separator 30 respectively supplied from the first electrode plate supply portion 110, the first separator supply portion 120 and the second separator supply portion 130, are inserted between the first guide roll 141 and the second guide roll 142. That is to say, on the basis of the first electrode plate 10 inserted between the first guide roll 141 and the second guide roll 142, the first separator 20 is inserted between the first electrode plate 10 and the first guide roll 141, and the second separator 30 is inserted between the first electrode plate 10 and the second guide roll 142. The first separator 20 and the second separator 30 are arranged on the bottom and top surfaces of the first electrode plate 10 and then stacked, thereby forming the first electrode plate bonded body 40. In addition, as the first guide roll 141 and the second guide roll 142 rotate, the first electrode plate bonded body 40 is supplied to the second electrode plate supply portion 150.

The second electrode plate supply portion 150 may include a pick-and-place device. The pick-and-place device may place the second electrode plate 50 cut to have a predefined length on the bottom and top surfaces of the first electrode plate bonded body 40 supplied from the first electrode plate bonded body supply portion 140, thereby forming a unit cell 60. In addition, the pick-and-place device may simultaneously place the second electrode plate 50 on both surfaces of the first electrode plate bonded body 40, or may sequentially place the second electrode plate 50 on one surface of the first electrode plate bonded body 40 and then the other surface. In addition, the unit cell 60 is stacked on the stacking portion 160 by the folding portion 170.

In addition, the second electrode plate 50 has an opposite polarity to that of the first electrode plate 10. In addition, the second electrode plate 50 may include an active material layer formed on both surfaces thereof according to its polarity.

The first electrode plate bonded body 40 is folded in the stacking portion 160 and the unit cell 60 is stacked thereon. The stacked unit cell 60 forms the cell stack 70. The cell stack 70 is stacked such that the separators 20 and 30 are interposed between the first electrode plate 10 and the second electrode plate 50.

The folding portion 170 may include a gripper. The gripper may press the second electrode plate 50 arranged on the bottom and top surfaces of the first electrode plate bonded body 40 to then fix the second electrode plate 50 to the first electrode plate bonded body 40. The gripper may be fixed to the unit cell 60 and may then be transferred to the stacking portion 160 to fold the first electrode plate bonded body 40, thereby forming the cell stack 70. In addition, the gripper may fold the first electrode plate bonded body 40 in a substantially Z- or S-shape.

Meanwhile, the folding portion 170 may include two grippers, which alternatively fold the first electrode plate bonded body 40. That is to say, while one of the two grippers folds the first electrode plate bonded body 40, the other gripper may make a preparation for the next folding operation.

The fixing portion 180 presses a top end of the cell stack 70 stacked on the stacking portion 160, thereby allowing the first electrode plate bonded body 40 to be folded without being crumpled while the folding portion 170 folds the first electrode plate bonded body 40.

Hereinafter, a folding operation of a stacking device for a secondary battery according to various embodiments of the present invention will be described.

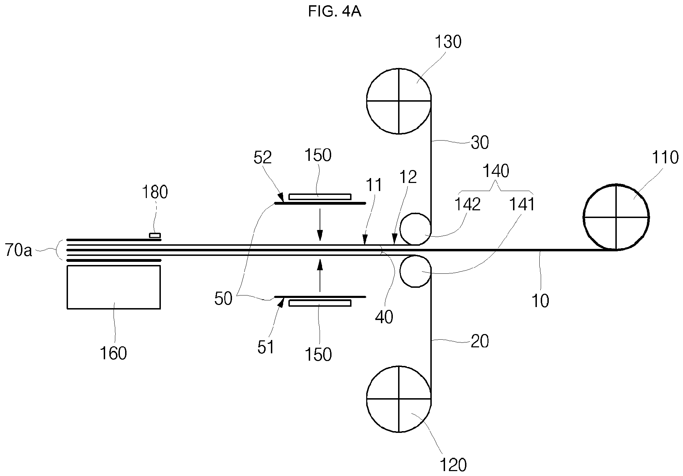

FIGS. 4A to 4H sequentially show a folding operation of a stacking device for a secondary battery according to various embodiments of the present invention.

As illustrated in FIG. 4A, a first electrode plate 10, a first separator 20 and a second separator 30 are supplied from a first electrode plate supply portion 110, a first separator supply portion 120 and a second separator supply portion 130, respectively, to a first electrode plate bonded body supply portion 140, thereby forming a first electrode plate bonded body 40 having the first separator 20 and the second separator 30 stacked on both surfaces of the first separator 20. Next, the first electrode plate bonded body 40 is supplied to a second electrode plate supply portion 150.

In addition, the second electrode plate supply portion 150 supplies the second electrode plate 50 to both surfaces of the first electrode plate bonded body 40, thereby forming a unit cell 60.

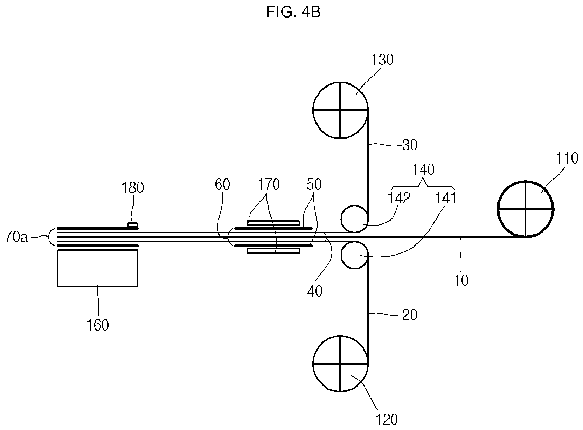

As illustrated in FIG. 4B, a folding portion 170 presses the second electrode plate 50 of the unit cell 60 and then fixes the second electrode plate 50 to the first electrode plate bonded body 40.

In addition, a fixing portion 180 may press a top end of a cell stack 70a stacked on a stacking portion 160.

Meanwhile, when there is no cell stack 70a stacked on the stacking portion 160, the unit cell 60 is transferred to the stacking portion 160 and is then stacked without a folding operation performed by the folding portion 170, thereby forming the cell stack 70a. In addition, when the unit cell 60 is stacked on the stacking portion 160 for the first time, it may be formed such that the second electrode plate 50 is arranged only on a top surface of the first electrode plate bonded body 40.

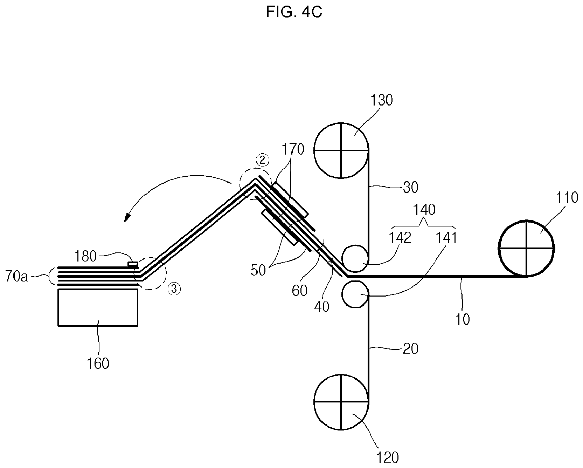

As illustrated in FIG. 4C, the folding portion 170 is fixed to the unit cell 60 and is then transferred to the stacking portion 160. When the folding portion 170 is transferred, a first folding portion ② is formed at one end of the unit cell 60 in a direction in which the folding portion 170 is transferred, and a second folding portion ③ is formed at one end of the cell stack 70a in a direction in which the first electrode plate bonded body 40 is supplied.

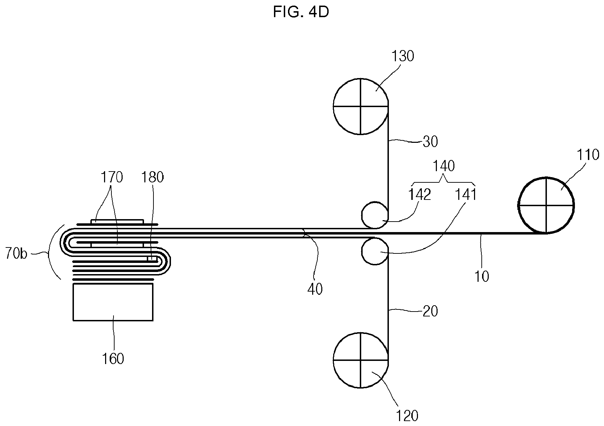

As illustrated in FIG. 4D, the folding portion 170 allows the unit cell 60 to be stacked on the stacking portion 160, thereby forming a cell stack 70b. The first folding portion ② and the second folding portion ③ form a first curved portion ④ and a second curved portion ⑤ of the cell stack 70b, respectively, when the first electrode plate bonded body 40 is folded and stacked.

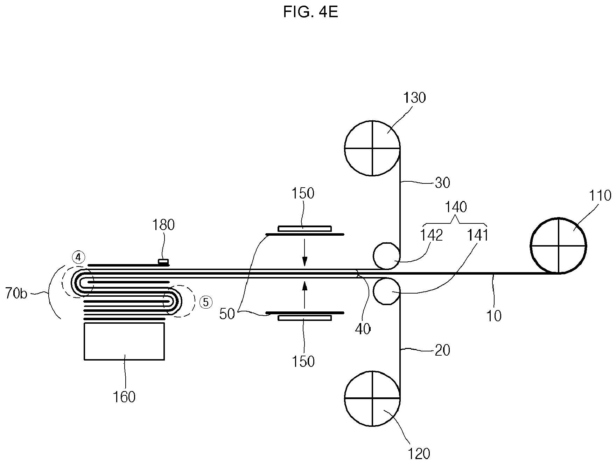

As illustrated in FIG. 4E, this process is similar to the process shown in FIG. 4A.

In the first electrode plate bonded body supply portion 140, the first electrode plate bonded body 40 having the first separator 20 and the second separator 30 stacked thereon is formed on both surfaces of the first separator 20. The first electrode plate bonded body 40 is supplied to the second electrode plate supply portion 150. In addition, the second electrode plate supply portion 150 supplies the second electrode plate 50 to both surfaces of the first electrode plate bonded body 40, thereby forming the unit cell 60.

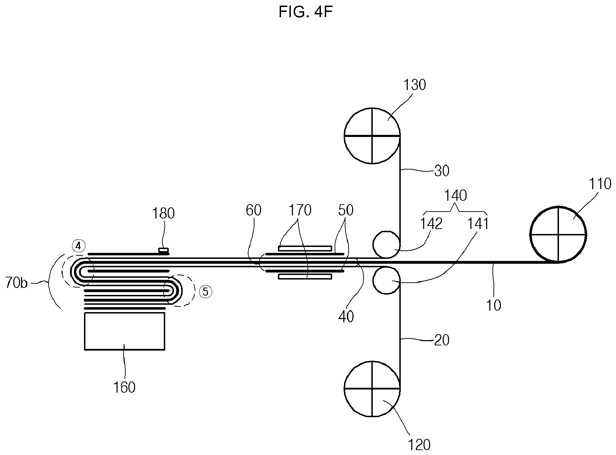

As illustrated in FIG. 4F, this process is similar to the process shown in FIG. 4B.

The folding portion 170 presses the second electrode plate 50 of the unit cell 60 and fixes the second electrode plate 50 to the first electrode plate bonded body 40.

In addition, the fixing portion 180 may press the top end of the cell stack 70b on the stacking portion 160.

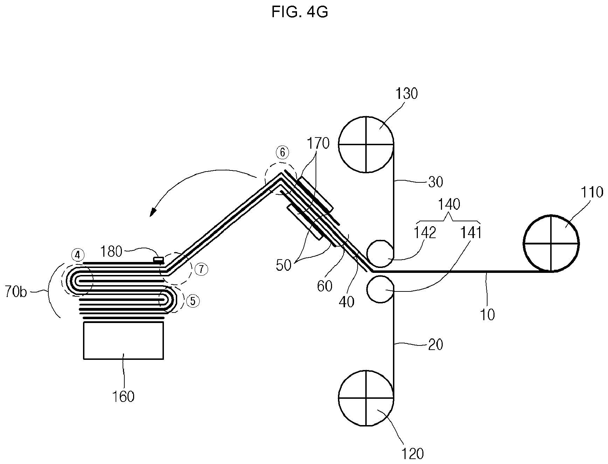

As illustrated in FIG. 4G, this process is similar to the process shown in FIG. 4C.

The folding portion 170 is fixed to the unit cell 60 and is then transferred to the stacking portion 160. When the folding portion 170 is transferred, a third folding portion ⑥ is formed at one end of the unit cell 60 in a direction in which the folding portion 170 is transferred, and a fourth folding portion ⑦ is formed at one end of the cell stack 70b in a direction in which the first electrode plate bonded body 40 is supplied.

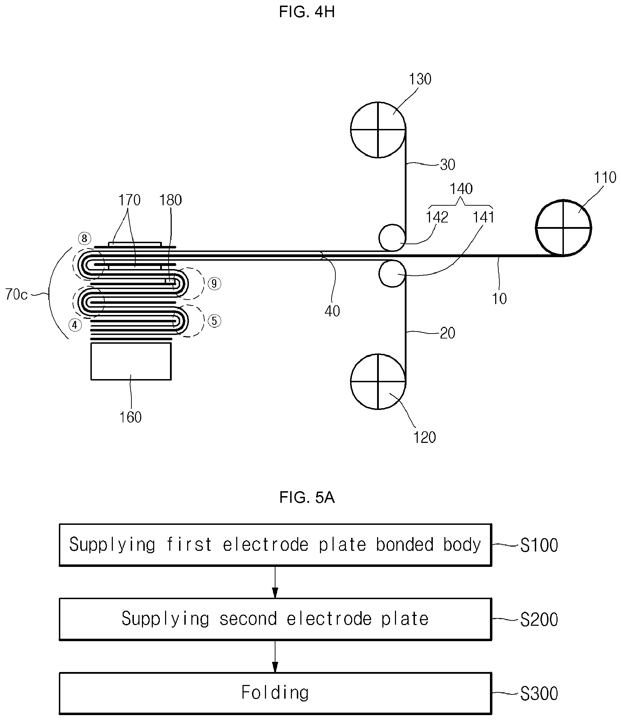

As illustrated in FIG. 4H, this process is similar to the process shown in FIG. 4D.

The folding portion 170 allows the unit cell 60 to be stacked on the stacking portion 160, thereby forming a cell stack 70c. The third folding portion ⑥ and the fourth folding portion ⑦ form a third curved portion ⑧ and a fourth curved portion ⑨ of the cell stack 70c, respectively, when the first electrode plate bonded body 40 is folded and stacked.

Meanwhile, an outer surface of the cell stack 70 completed in the above-described procedure may be enwrapped by the separators 20 and 30.

Referring back to FIGS. 3 and 4A, the first electrode plate 10 may include, for example, a first electrode first coating portion 11, a first electrode second coating portion 12 formed to be spaced apart from the first electrode first coating portion 11, and a first electrode third coating portion 13 formed to be spaced apart from the first electrode second coating portion 12. In addition, the second electrode plate 50 may include, for example, a second electrode first coating portion 51 and a second electrode second coating portion 52. With the aforementioned stacking device 100, the second electrode first coating portion 51 and the second electrode second coating portion 52 may be positioned on and under the first electrode first coating portion 11, respectively. In addition, the second electrode second coating portion 52 and a second electrode third coating portion (not shown) may be positioned under the first electrode second coating portion 12. In addition, the first electrode third coating portion 13 may be positioned on the second electrode third coating. This stacked structure of the secondary battery will further be described below.

Hereinafter, a stacking method using a stacking device for a secondary battery according to various embodiments of the present invention will be described.

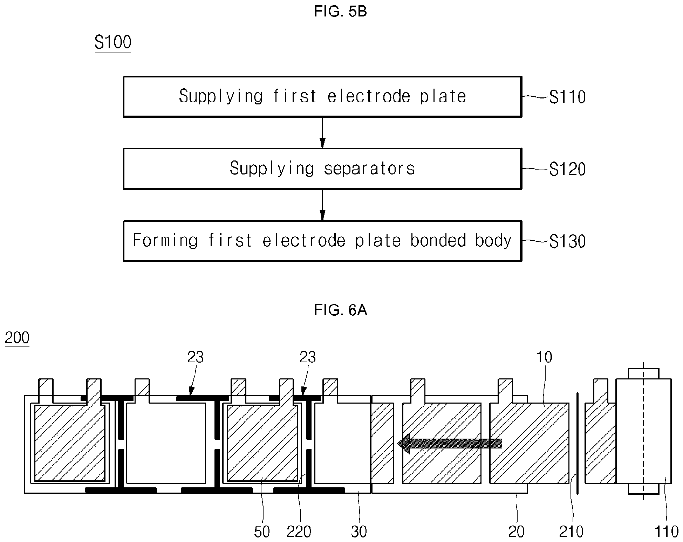

FIG. 5A is a flowchart of a stacking method using a stacking device for a secondary battery according to various embodiments of the present invention. FIG. 5B is a flowchart of a first electrode plate bonded body supplying step in the stacking method using the stacking device for a secondary battery according to various embodiments of the present invention.

As illustrated in FIGS. 5A and 5B, the stacking method for a secondary battery according to various embodiments of the present invention may include a first electrode plate bonded body supplying step (S100), a second electrode plate supplying step (S200) and a folding step (S300).

In the first electrode plate bonded body supplying step (S100), the first electrode plate bonded body 40 is supplied. The first electrode plate bonded body supplying step (S100) may include a first electrode plate supplying step (S110), a separator supplying step (S120) and a first electrode plate bonded body forming step (S130).

In the first electrode plate supplying step (S110), the first electrode plate 10 is supplied. In the separator supplying step (S120), the first separator 20 and the second separator 30 are supplied to bottom and top surfaces of the first electrode plate 10. In the first electrode plate bonded body forming step (S130), the first electrode plate bonded body 40 is formed by the first separator 20 and the second separator 30 supplied to the bottom and top surfaces of the first electrode plate 10.

In the second electrode plate supplying step (S200), the second electrode plate 50 is arranged on bottom and top surfaces of the first electrode plate bonded body 40, thereby forming the unit cell 60.

In the folding step S300, the first electrode plate bonded body 40 is folded to stack the unit cell 60 such that the separators 20 and 30 are interposed between the first electrode plate 10 and the second electrode plate 50, thereby forming the cell stack 70.

In the stacking device 100 for a secondary battery according to various embodiments of the present invention and the stacking method using the same, the first electrode plate bonded body 40 is configured such that the separators 20 and 30 are stacked on the bottom and top surfaces of the first electrode plate 10, and the second electrode plate 50 is arranged on the bottom and top surfaces of the first electrode plate bonded body 40, followed by stacking using the folding portion 170, thereby achieving the effect of stacking four sheets of electrode plates at once by performing a sophisticated one-time folding operation without changing base materials or further performing additional processes.

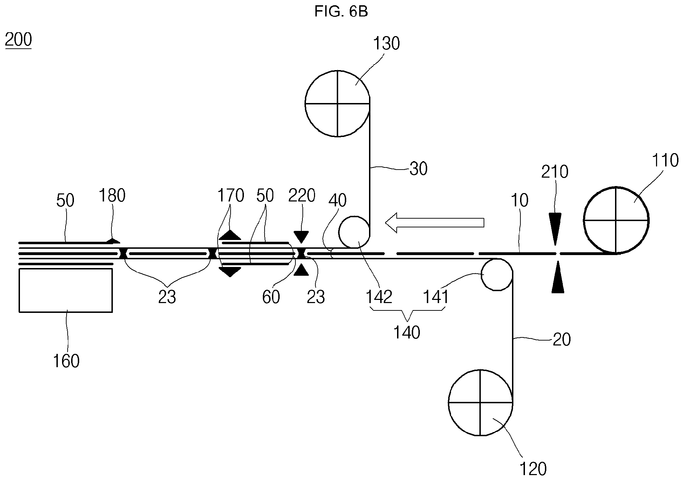

FIGS. 6A and 6B are a plan view and a side view of a stacking device for a secondary battery according to various embodiments of the present invention.

As illustrated in FIGS. 6A and 6B, the stacking device 200 for a secondary battery according to various embodiments of the present invention may further include a first electrode plate cutting portion 210 and includes a separator bonding portion 220 in addition to various components of the aforementioned stacking device 100. Of course, the configurations and operations of the aforementioned stacking device 100 may be commonly applied to those of the stacking device 200, except for configurations and operations of the first electrode plate cutting portion 210 and the separator bonding portion 220.

The first electrode plate cutting portion 210 cuts the first electrode plate 10 supplied from the first electrode plate supply portion 110 in a continuous form by a predefined width, thereby supplying independent individual units of the first electrode plate 10 to the first electrode plate bonded body supply portion 140. That is to say, the first electrode plate cutting portion 210 serves to supply the first electrode plate 10 in an independent form to a region between the first separator 20 and the second separator 30. The first electrode plate cutting portion 210 may be, for example, but not limited to, in forms of cutters facing each other or presses facing each other.

Here, while the first guide roll 141 and the second guide roll 142 are illustrated as being spaced a predetermined distance apart from each other in a horizontal direction in which the first electrode plate 10 is transferred, aspects of the present invention are not limited thereto. Rather, as illustrated in FIG. 1, the first guide roll 141 and the second guide roll 142 may be installed so as to vertically overlap each other at the same position.

The separator bonding portion 220 bonds separator regions corresponding to edges of the first electrode plate 10 in the first and second separators 20 and 30 positioned on both surfaces of the first electrode plate 10. Here, the separator bonding portion 220 bonds the first and second separators 20 and 30 to each other by partially melting the regions of the first and second separators 20 and 30 or by coating an adhesive between the first and second separators 20 and 30 in advance and then curing. The separator bonding portion 220 may be, for example, but not limited to, in forms of heaters facing each other or presses facing each other.

Meanwhile, bonding regions 23 are formed at the regions of the first and second separators 20 and 30 positioned on both surfaces of the first electrode plate 10, the regions corresponding to edges of the first electrode plate 10, by the separator bonding portion 220. The bonding regions 23 may be configured to completely surround four sides of the first electrode plate 10 or to partially surround the four sides of the first electrode plate 10. Preferably, the bonding regions 23 are configured to partially surround the four sides of the first electrode plate 10, thereby allowing an electrolyte solution to be easily injected into the first electrode plate 10. That is to say, as illustrated in FIG. 6A, the bonding regions 23 may be configured to be opened substantially from top, bottom, left and right sides of the first electrode plate 10, respectively.

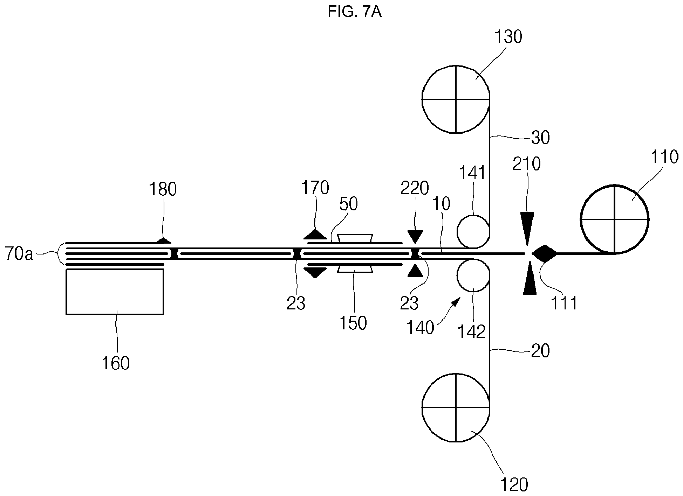

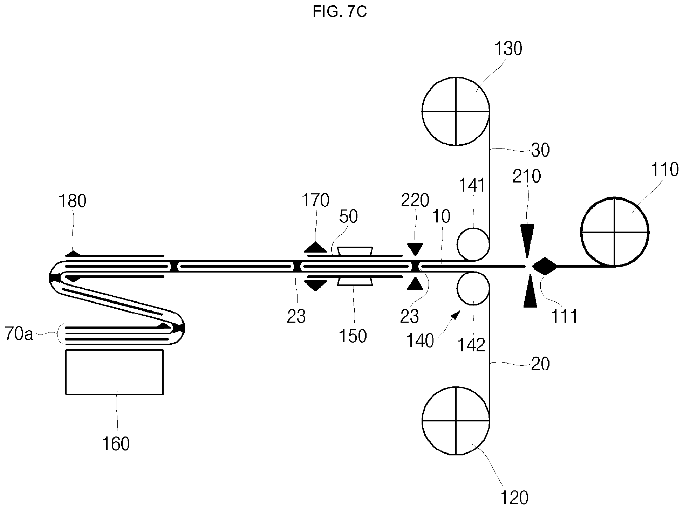

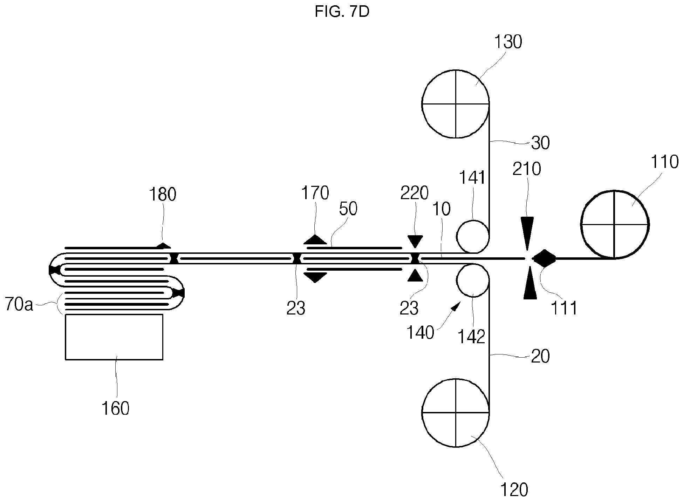

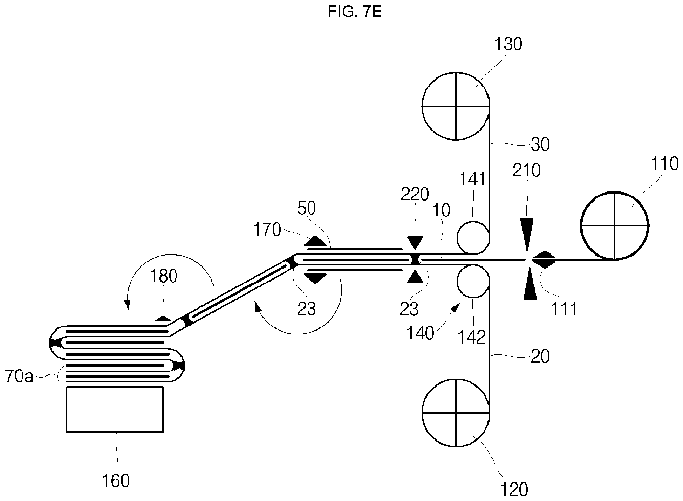

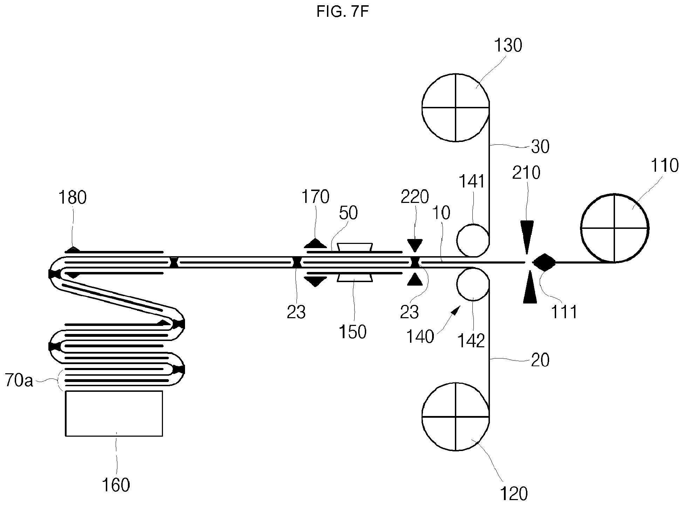

FIGS. 7A to 7F sequentially show a folding operation of a stacking device for a secondary battery according to various embodiments of the present invention.

As illustrated in FIGS. 7A to 7F, the folding operation of the stacking device may further include a first electrode plate cutting operation and a separator bonding operation in addition to the aforementioned folding operation of the stacking device. Of course, the configurations and operations of the aforementioned folding operation may be commonly applied to those of the folding operation, except for the first electrode plate cutting operation and the separator bonding operation.

As illustrated in FIG. 7A, a first electrode plate 10, a first separator 20 and a second separator 30 respectively supplied from a first electrode plate supply portion 110, a first separator supply portion 120 and a second separator supply portion 130, are supplied to a first electrode plate bonded body supply portion 140, thereby forming a first electrode plate bonded body 40 having the first separator 20 and the second separator 30 stacked on both surfaces of the first electrode plate 10.

Here, since the first electrode plate 10 supplied from the first electrode plate supply portion 110 is cut to have a predefined length by a first electrode plate cutting portion 210 to then be supplied to the first electrode plate bonded body supply portion 140 in an independent form, the first electrode plate bonded body 40 may be supplied with the first electrode plate 10 in the independent form, rather than a continuous form. That is to say, before the first electrode plate 10 is supplied to the first electrode plate bonded body supply portion 140, the first electrode plate 10 separated/isolated into an individual unit by the first electrode plate cutting step is supplied to the first electrode plate bonded body supply portion 140.

Next, the first electrode plate bonded body 40 is supplied to a second electrode plate supply portion 150. In addition, the second electrode plate supply portion 150 supplies an independent second electrode plate 50 to both surfaces of the first electrode plate bonded body 40, thereby forming a unit cell 60.

Before or after the second electrode plate 50 is supplied, a separator bonding operation is further performed. That is to say, before or after the unit cell 60 is formed, separator regions corresponding to edges of the first electrode plate 10 in the first and second separators 20 and 30 positioned on both surfaces (e.g., top and bottom surfaces) of the first electrode plate 10, are bonded, thereby forming separator bonding regions 23.

Undefined reference numeral 111 denotes a fixing portion for stably fixing a position of the first electrode plate 10 when the first electrode plate 10 is cut by the first electrode plate cutting portion 210.

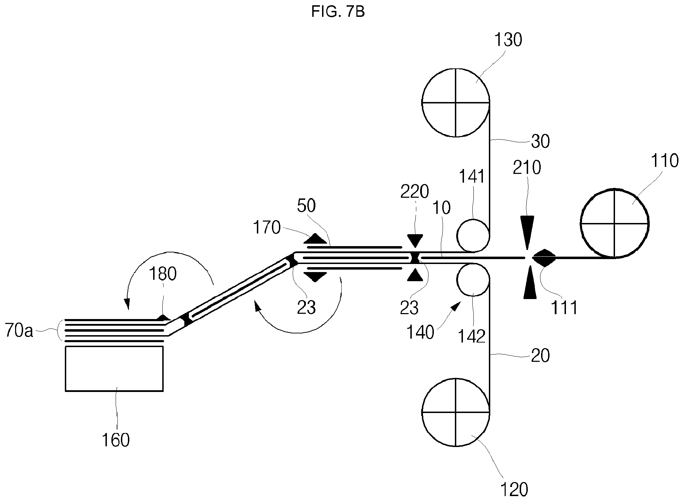

Meanwhile, since the operations illustrated in FIGS. 7B to 7F are substantially the same as those illustrated in FIGS. 4C to 4H, detailed descriptions thereof will not be given.

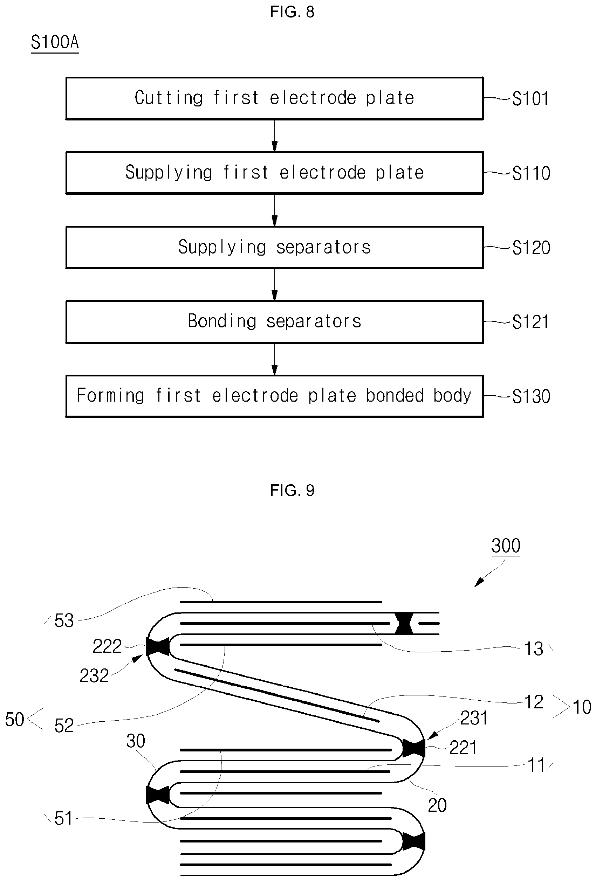

FIG. 8 is a flowchart of a first electrode plate bonded body supplying step in a stacking method using a stacking device for a secondary battery according to various embodiments of the present invention.

As illustrated in FIG. 8, in a first electrode plate bonded body supplying step (S100A) of the stacking method using a stacking device for a secondary battery, the first electrode plate bonded body 40 is supplied. The first electrode plate bonded body supplying step (S100A) may include a first electrode plate cutting step (S101), a first electrode plate supplying step (S110), a separator supplying step (S120), a separator bonding step (S121), and a first electrode plate bonded body forming step (S130).

In the first electrode plate cutting step (S101), a first electrode plate 10 unwound from a first electrode plate supply portion 110 is cut to have a predefined length by a first electrode plate cutting portion 210 and is then supplied.

In the first electrode plate supplying step (S110), a first electrode plate 10 cut by a predefined length, as described above, is supplied to a first electrode plate bonded body supply portion 140.

In the separator supplying step (S120), a first separator 20 and a second separator 30 are supplied to bottom and top surfaces of the first electrode plate 10.

In the separator bonding step (S121), separator regions corresponding to edges of the first electrode plate 10 in the separators 20 and 30 positioned on both surfaces of the first electrode plate 10, are bonded to each other by a separator bonding portion 220, thereby forming bonding regions 23 in the separator regions corresponding to the edges of the first electrode plate 10.

In the first electrode plate bonded body forming step (S130), the first separator 20 and the second separator 30 supplied to the bottom and top surfaces of the first electrode plate 10 are stacked, thereby completing the first electrode plate bonded body 40.

As described above, in the stacking device 200 for a secondary battery according to various embodiments of the present invention and the stacking method using the same, the first electrode plate 10 and the second electrode plate 50, which are cut into individual units, are supplied, and specifically, separator regions corresponding to edges of the first electrode plate 10 in the first and second separators 20 and 30 positioned on both surfaces of the first electrode plate 10 are bonded to each other, thereby preventing the first electrode plate 10 from moving between two sheets of the separators 20 and 30 and providing the secondary battery having excellent safety and reliability.

FIG. 9 is a schematic view of a secondary battery according to various embodiments of the present invention. For a better understanding of the present invention, the secondary battery 300 being in a stacking operation is illustrated herein.

As illustrated in FIG. 9, the secondary battery 300 according to various embodiments of the present invention may include a first electrode plate 10, separators 20 and 30, and a second electrode plate 50.

The first electrode plate 10 may include a first electrode plate first coating portion 11 and a first electrode plate second coating portion 12 formed to be vertically spaced apart from the first electrode plate first coating portion 11. In addition, the first electrode plate 10 may further include a first electrode plate third coating portion 13 formed to be vertically spaced apart from the first electrode plate second coating portion 12.

The separators 20 and 30 wrap around the first electrode plate 10 from its top and bottom portions. For example, the separators 20 and 30 may wrap around the first electrode plate first coating portion 11, the first electrode plate second coating portion 12 and the first electrode plate third coating portion 13 from their top and bottom portions.

The second electrode plate 50 may include a second electrode plate first coating portion 51 and a second electrode plate second coating portion 52 formed to be vertically spaced apart from the second electrode plate first coating portion 51. In addition, the second electrode plate 50 may further include a second electrode plate third coating portion 53 formed to be vertically spaced apart from the second electrode plate second coating portion 52.

Meanwhile, with the aforementioned stacking device and the stacking method using the same, the first electrode plate 10 and the separators 20 and 30 wrapping around the first electrode plate 10 from its top and bottom portions may be formed in a meandering configuration. That is to say, the secondary battery 300 according to various embodiments of the present invention may further include a first folding region 231 formed by folding a region between the first electrode plate first coating portion 11 and the first electrode plate second coating portion 12 of the first electrode plate 10 in a first direction. In addition, the secondary battery 300 according to various embodiments of the present invention may further include a second folding region 232 formed by folding a region of the first electrode plate 10 between the first electrode plate second coating portion 12 and the first electrode plate third coating portion 13 in a second direction. Here, the first direction and the second direction may be opposite to each other. More specifically, a region of the separator 20, 30 corresponding to the region between the first electrode plate first coating portion 11 and the first electrode plate second coating portion 12 of the first electrode plate 10 is folded in the first direction, thereby forming the first folding region 231. In addition, a region of the separator 20, 30 corresponding to the region between the first electrode plate second coating portion 12 and the first electrode plate third coating portion 13 of the first electrode plate 10 is folded in the second direction opposite to the first direction, thereby forming the second folding region 232.

In addition, with this configuration, the second electrode plate first coating portion 51 of the second electrode plate 50 may be positioned on the first electrode plate first coating portion 11, and the second electrode plate second coating portion 52 may be positioned on the first electrode plate second coating portion 12. That is to say, the second electrode plate first coating portion 51 and the second electrode plate second coating portion 52 may be stacked while facing the first electrode plate first coating portion 11 and the first electrode plate second coating portion 12, respectively.

In other words, the first electrode plate second coating portion 12 may be interposed between the second electrode plate first coating portion 51 and the second electrode plate second coating portion 52, and the first electrode plate first coating portion 11 may be positioned under the second electrode plate first coating portion 51. In other words, the second electrode plate first coating portion 51 is interposed between the first electrode plate first coating portion 11 and the first electrode plate second coating portion 12 in view of the first folding region 231 and/or a first bonding region 221 to be described later.

In addition, the second electrode plate second coating portion 52 of the second electrode plate 50 may be positioned under the first electrode third coating portion 13, and the second electrode plate third coating portion 53 may be positioned on the first electrode third coating portion 13. That is to say, the second electrode plate second coating portion 52 and the second electrode plate third coating portion 53 may be stacked while facing the first electrode plate second coating portion 12 and the first electrode plate third coating portion 13, respectively.

In other words, the first electrode plate third coating portion 13 is interposed between the second electrode plate second coating portion 52 and the second electrode plate third coating portion 53, and the first electrode plate second coating portion 12 is positioned under the second electrode plate second coating portion 52. In other words, the second electrode plate second coating portion 52 is interposed between the first electrode plate second coating portion 12 and the first electrode plate third coating portion 13 in view of the second folding region 232) and/or the second bonding region 222.

With this stack structure, the secondary battery 300 according to the present invention may operate such that lithium ions move between the first electrode plate 10 and the second electrode plate 50 with the separator interposed therebetween.

Next, the secondary battery 300 according to various embodiments of the present invention further includes the first bonding region 221 formed by bonding the separators 20 and 30 positioned between the first electrode plate first coating portion 11 and the first electrode plate second coating portion 12 to each other. In addition, the secondary battery 300 according to various embodiments of the present invention may further include the second bonding region 222 formed by bonding the separators 20 and 30 positioned between the first electrode plate second coating portion 12 and the first electrode plate third coating portion 13. The first electrode plate 10 is confined inside the separators 20 and 30 by the first and second bonding regions 221 and 222 of the separators 20 and 30, thereby preventing the first electrode plate 10 and the second electrode plate 50 from being electrically shorted to each other.

In addition, as illustrated in FIG. 6A, the bonding regions 221 and 222 may also be formed not only at the separator regions between the first electrode plate first coating portion 11 and the first electrode plate second coating portion 12 and/or between the first electrode plate second coating portion 12 and the first electrode plate third coating portion 13 but also at separator regions corresponding to four sides of the first electrode plate first coating portion 11 and/or separator regions corresponding to four sides of the first electrode plate second coating portion 12. Therefore, the first electrode plate 10 can be more stably positioned within the separators 20 and 30. That is to say, the first electrode plate 10 can be confined without falling off four exterior sides of the separators 20 and 30.

As described above, in the secondary battery 300 according to the present invention, the first and second folding regions 231 and 232 are formed on the separators 20 and 30, respectively, and the first and second bonding regions 221 and 222 are formed on the first and second folding regions 231 and 232, respectively, thereby stably positioning the first electrode plate 10 within the separators 20 and 30 without being moved. Therefore, an electrical short between the first electrode plate 10 and the second electrode plate 50 can be suppressed. In addition, since the first and second bonding regions 221 and 222 are discontinuously formed at the separators 20 and 30, an electrolyte solution can be easily transferred to the first electrode plate 10.

Although the foregoing embodiments have been described to practice the stacking device for a secondary battery, the stacking method using the same, and the secondary battery obtained thereby according to the present invention, these embodiments are set forth for illustrative purposes and do not serve to limit the invention. Those skilled in the art will readily appreciate that many modifications and variations can be made, without departing from the scope of the invention as defined in the appended claims.

## Claims

1. A stacking device (100) for a secondary battery, the stacking device (100) comprising:
a first electrode plate bonded body supply portion (140) for supplying a first electrode plate bonded body comprising a first electrode plate, which comprises a first electrode first coating portion and a first electrode second coating portion positioned to be spaced apart from the first electrode first coating portion, and separators stacked on both surfaces of the first electrode plate;
a second electrode plate supply portion (150) for arranging a second electrode first coating portion and a second electrode second coating portion of a second electrode plate on both surfaces of the first electrode first coating portion of the first electrode plate bonded body, respectively, thereby forming a unit cell; and
a folding portion (170) for folding the first electrode plate bonded body, which has the unit cell formed thereon, such that the second electrode first coating portion or the second electrode second coating portion of the second electrode plate faces the first electrode second coating portion of the first electrode plate, thereby forming a stack,
**characterized in that** the stacking device (100) further comprises
a separator bonding portion (220) for bonding separator regions corresponding to edges of the first electrode plate in the separators positioned on both surfaces of the first electrode plate.

2. The stacking device (100) of claim 1, further comprising:
a first electrode plate supply portion (110) for supplying the first electrode plate to the first electrode plate bonded body supply portion (140); and
a separator supply portion (120, 130) for supplying the separators to the first electrode plate bonded body supply portion (140),
wherein the first electrode plate bonded body is stacked by arranging the first electrode plate and the separators.

3. The stacking device (100) of claim 1, wherein the first electrode plate of the first electrode plate bonded body is supplied in a continuous form, and the second electrode plate is cut to have a predefined length to then be arranged on both surfaces of the first electrode plate bonded body.

4. The stacking device (100) of claim 1, wherein the first electrode plate is cut to have a predefined length to then be supplied in an independent form, and the second electrode plate is cut to have a predefined length to then be arranged on both surfaces of the first electrode plate bonded body.

5. The stacking device (100) of claim 1, wherein the folding portion (170) includes a gripper for pressing the second electrode plate arranged on both surfaces of the first electrode plate bonded body to fix the second electrode plate to the first electrode plate bonded body, the gripper fixed to the unit cell and folding the first electrode plate bonded body.

6. The stacking device (100) of claim 1, wherein the folding portion (170) includes a first folding portion (2) and a second folding portion (3), and the first folding portion (2) and the second folding portion (3) alternately fold the first electrode plate bonded body, which has the unit cell formed thereon, thereby forming the cell stack.

7. The stacking device (100) of claim 1, further comprising a fixing portion (180) for pressing and fixing the cell stack during the folding operation performed by the folding portion (170).

8. The stacking device (100) of claim 1, wherein the first electrode plate has a region corresponding to a curved portion of the cell stack, the region from which an active material is removed.

9. A stacking method for a secondary battery, the stacking method comprising:
a first electrode plate bonded body supplying step (S100) of supplying a first electrode plate bonded body comprising a first electrode plate including a first electrode first coating portion and a first electrode second coating portion positioned to be spaced apart from the first electrode first coating portion, and separators stacked on both surfaces of the first electrode plate;
a second electrode plate supplying step (S200) of arranging a second electrode first coating portion and a second electrode second coating portion of a second electrode plate on both surfaces of the first electrode first coating portion of the first electrode plate bonded body, respectively, thereby forming a unit cell; and
a folding step (S300) of folding the first electrode plate bonded body, which has the unit cell formed thereon, such that the second electrode first coating portion or the second electrode second coating portion of the second electrode plate faces the first electrode second coating portion of the first electrode plate, thereby forming a cell stack,
**characterized in that** after the first electrode plate bonded body supplying step (S100), the method further comprises
a separator bonding step (S121) of bonding separator regions corresponding to edges of the first electrode plate in the separators positioned on both surfaces of the first electrode plate.

10. The stacking method of claim 9, wherein the first electrode plate bonded body supplying step (S100) comprises:
a first electrode plate supplying step (S110) of supplying the first electrode plate;
a separator supplying step (S120) of supplying separators to both surfaces of the first electrode plate; and
a first electrode plate bonded body forming step (S130) of forming a first electrode plate bonded body by stacking the separators supplied to both surfaces of the first electrode plate.

11. The stacking method of claim 9, wherein the first electrode plate is supplied in a continuous form in the first electrode plate bonded body supplying step (S100), and the second electrode plate is cut to have a predefined length to then be arranged on both surfaces of the first electrode plate bonded body in the second electrode plate supplying step (S200).

12. The stacking method of claim 9, wherein the first electrode plate is cut to have a predefined length to then be supplied in an independent form in the first electrode plate bonded body supplying step (S100), and the second electrode plate is cut to have a predefined length to then be arranged on both surfaces of the first electrode plate bonded body in the second electrode plate supplying step (S200).

13. The stacking method of claim 10, wherein the first electrode plate of the first electrode plate supplying step (S110) has a region corresponding to a curved portion of the cell stack, the region from which an active material is removed.

14. A secondary battery (300) comprising:
a first electrode plate first coating portion (11);
a first electrode plate second coating portion (12);
separators (20, 30) stacked around the first electrode plate first coating portion (11) and the first electrode plate second coating portion (12) on their top and bottom portions, respectively;
a second electrode plate first coating portion (51) stacked while facing the first electrode plate first coating portion (11); and
a first folding region (231) formed by folding a region between the first electrode plate first coating portion (11) and the first electrode plate second coating portion (12) in a first direction,
wherein the folded first electrode plate second coating portion (12) is stacked while facing the second electrode plate first coating portion (51),
**characterized in that**
the secondary battery (300) further comprises a first bonding region (221) formed by bonding the separators (20, 30) between the first electrode plate first coating portion (11) and the first electrode plate second coating portion (12).

15. The secondary battery (300) of claim 14, further comprising a second electrode plate second coating portion (52) stacked while facing the first electrode plate second coating portion (12).

16. The secondary battery (300) of claim 15, further comprising:
a first electrode plate third coating portion (13) stacked while facing the second electrode plate second coating portion (52); and
a second folding region (232) formed by folding a region between the first electrode plate second coating portion (12) and the first electrode plate third coating portion (13) in a second direction, wherein the folded first electrode plate third coating portion (13) is stacked while facing the second electrode plate second coating portion (52).

17. The secondary battery (300) of claim 16, further comprising a second bonding region (222) formed by bonding the separators (20, 30) between the first electrode plate second coating portion (12) and the first electrode plate third coating portion (13).

18. The secondary battery (300) of claim 14, wherein the first direction and the second direction are different from each other.

19. The secondary battery (300) of claim 17, further comprising a second electrode plate third coating portion (53) stacked while facing the first electrode plate third coating portion (13).

## Patentansprüche

1. Eine Stapelvorrichtung (100) für eine Sekundärbatterie, wobei die Stapelvorrichtung (100) aufweist:
einen ersten Elektrodenplatten-Verbundkörper-Zuführabschnitt (140) zum Zuführen eines ersten Elektrodenplatten-Verbundkörpers, der eine erste Elektrodenplatte, die einen ersten Beschichtungsabschnitt der ersten Elektrode und einen zweiten Beschichtungsabschnitt der ersten Elektrode, der positioniert ist, um vom ersten Beschichtungsabschnitt der ersten Elektrode beabstandet zu sein, aufweist und Separatoren, die auf beiden Oberflächen der ersten Elektrodenplatte gestapelt sind, aufweist;
einen zweiten Elektrodenplatten-Zuführabschnitt (150) zum Anordnen jeweils eines ersten Beschichtungsabschnitts der zweiten Elektrode und eines zweiten Beschichtungsabschnitts der zweiten Elektrode einer zweiten Elektrodenplatte auf beiden Oberflächen des ersten Beschichtungsabschnitts der ersten Elektrode des ersten Elektrodenplatten-Verbundkörpers, wodurch eine Einheitszelle ausgebildet wird; und
einen Faltabschnitt (170) zum Falten des ersten Elektrodenplatten-Verbundkörpers, der die darauf ausgebildete Einheitszelle aufweist, derart, dass der erste Beschichtungsabschnitt der zweiten Elektrode oder der zweite Beschichtungsabschnitt der zweiten Elektrode der zweiten Elektrodenplatte dem zweiten Beschichtungsabschnitt der ersten Elektrode der ersten Elektrodenplatte zugewandt ist, wodurch ein Stapel ausgebildet wird,
**dadurch gekennzeichnet, dass** die Stapelvorrichtung (100) ferner aufweist
einen Separator-Verbindungsabschnitt (220) zum Verbinden von Separatorbereichen, die Rändern der ersten Elektrodenplatte in den auf beiden Oberflächen der ersten Elektrodenplatte positionierten Separatoren entsprechen.

2. Die Stapelvorrichtung (100) nach Anspruch 1, ferner aufweisend:
einen ersten Elektrodenplatten-Zuführabschnitt (110) zum Zuführen der ersten Elektrodenplatte zum ersten Elektrodenplatten-Verbundkörper-Zuführabschnitt (140); und
einen Separator-Zuführabschnitt (120, 130) zum Zuführen der Separatoren zum ersten Elektrodenplatten-Verbundkörper-Zuführabschnitt (140),
wobei der erste Elektrodenplatten-Verbundkörper durch Anordnen der ersten Elektrodenplatte und der Separatoren gestapelt wird.

3. Die Stapelvorrichtung (100) nach Anspruch 1, wobei die erste Elektrodenplatte des ersten Elektrodenplatten-Verbundkörpers in durchgehender Form zugeführt wird und die zweite Elektrodenplatte zugeschnitten wird, um eine vordefinierte Länge aufzuweisen, um dann auf beiden Oberflächen des ersten Elektrodenplatten-Verbundkörpers angeordnet zu werden.

4. Die Stapelvorrichtung (100) nach Anspruch 1, wobei die erste Elektrodenplatte zugeschnitten wird, um eine vordefinierte Länge aufzuweisen, um dann in unabhängiger Form zugeführt zu werden, und die zweite Elektrodenplatte zugeschnitten wird, um eine vordefinierte Länge aufzuweisen, um dann auf beiden Oberflächen des ersten Elektrodenplatten-Verbundkörpers angeordnet zu werden.

5. Die Stapelvorrichtung (100) nach Anspruch 1, wobei der Faltabschnitt (170) einen Greifer aufweist, um die zweite Elektrodenplatte, die auf beiden Oberflächen des ersten Elektrodenplatten-Verbundkörpers angeordnet ist, zu pressen, um die zweite Elektrodenplatte am ersten Elektrodenplatten-Verbundkörper zu befestigen, wobei der Greifer an der Einheitszelle befestigt ist und den ersten Elektrodenplatten-Verbundkörper faltet.

6. Die Stapelvorrichtung (100) nach Anspruch 1, wobei der Faltabschnitt (170) einen ersten Faltabschnitt (2) und einen zweiten Faltabschnitt (3) aufweist und der erste Faltabschnitt (2) und der zweite Faltabschnitt (3) den ersten Elektrodenplatten-Verbundkörper, der die darauf ausgebildete Einheitszelle aufweist, abwechselnd falten, wodurch der Zellenstapel ausgebildet wird.

7. Die Stapelvorrichtung (100) nach Anspruch 1, ferner aufweisend einen Befestigungsabschnitt (180) zum Pressen und Befestigen des Zellenstapels während des vom Faltabschnitt (170) durchgeführten Faltvorgangs.

8. Die Stapelvorrichtung (100) nach Anspruch 1, wobei die erste Elektrodenplatte einen Bereich, der einem gekrümmten Abschnitt des Zellenstapels entspricht, aufweist, wobei von dem Bereich ein Aktivmaterial entfernt ist.

9. Ein Stapelverfahren für eine Sekundärbatterie, wobei das Stapelverfahren aufweist:
einen ersten Elektrodenplatten-Verbundkörper-Zuführschritt (S100) zum Zuführen eines ersten Elektrodenplatten-Verbundkörpers, der eine erste Elektrodenplatte, die einen ersten Beschichtungsabschnitt der ersten Elektrode und einen zweiten Beschichtungsabschnitt der ersten Elektrode, der positioniert ist, um vom ersten Beschichtungsabschnitt der ersten Elektrode beabstandet zu sein, aufweist und Separatoren, die auf beiden Oberflächen der ersten Elektrodenplatte gestapelt sind, aufweist;
einen zweiten Elektrodenplatten-Zuführschritt (S200) zum Anordnen jeweils eines ersten Beschichtungsabschnitts der zweiten Elektrode und eines zweiten Beschichtungsabschnitts der zweiten Elektrode einer zweiten Elektrodenplatte auf beiden Oberflächen des ersten Beschichtungsabschnitts der ersten Elektrode des ersten Elektrodenplatten-Verbundkörpers, wodurch eine Einheitszelle ausgebildet wird; und
einen Faltschritt (S300) zum Falten des ersten Elektrodenplatten-Verbundkörpers, der die darauf ausgebildete Einheitszelle aufweist, derart, dass der erste Beschichtungsabschnitt der zweiten Elektrode oder der zweite Beschichtungsabschnitt der zweiten Elektrode der zweiten Elektrodenplatte dem zweiten Beschichtungsabschnitt der ersten Elektrode der ersten Elektrodenplatte zugewandt ist, wodurch ein Zellenstapel ausgebildet wird,
**dadurch gekennzeichnet, dass** das Verfahren nach dem ersten Elektrodenplatten-Verbundkörper-Zuführschritt (S100) ferner aufweist
einen Separator-Verbindungsschritt (S121) zum Verbinden von Separatorbereichen, die Rändern der ersten Elektrodenplatte in den auf beiden Oberflächen der ersten Elektrodenplatte positionierten Separatoren entsprechen.

10. Das Stapelverfahren nach Anspruch 9, wobei der erste Elektrodenplatten-Verbundkörper-Zuführschritt (S100) aufweist:
einen ersten Elektrodenplatten-Zuführschritt (S110) zum Zuführen der ersten Elektrodenplatte;
einen Separator-Zuführschritt (S120) zum Zuführen von Separatoren zu beiden Oberflächen der ersten Elektrodenplatte; und
einen ersten Elektrodenplatten-Verbundkörper-Ausbildungsschritt (S130) zum Ausbilden eines ersten Elektrodenplatten-Verbundkörpers durch Stapeln der Separatoren, die beiden Oberflächen der ersten Elektrodenplatte zugeführt werden.

11. Das Stapelverfahren nach Anspruch 9, wobei die erste Elektrodenplatte im ersten Elektrodenplatten-Verbundkörper-Zuführschritt (S100) in durchgehender Form zugeführt wird und die zweite Elektrodenplatte zugeschnitten wird, um eine vordefinierte Länge aufzuweisen, um dann im zweiten Elektrodenplatten-Zuführschritt (S200) auf beiden Oberflächen des ersten Elektrodenplatten-Verbundkörpers angeordnet zu werden.

12. Das Stapelverfahren nach Anspruch 9, wobei die erste Elektrodenplatte zugeschnitten wird, um eine vordefinierte Länge aufzuweisen, um dann im ersten Elektrodenplatten-Verbundkörper-Zuführschritt (S100) in unabhängiger Form zugeführt zu werden, und die zweite Elektrodenplatte zugeschnitten wird, um eine vordefinierte Länge aufzuweisen, um dann im zweiten Elektrodenplatten-Zuführschritt (S200) auf beiden Oberflächen des ersten Elektrodenplatten-Verbundkörpers angeordnet zu werden.

13. Das Stapelverfahren nach Anspruch 10, wobei die erste Elektrodenplatte des ersten Elektrodenplatten-Zuführschritts (S110) einen Bereich, der einem gekrümmten Abschnitt des Zellenstapels entspricht, aufweist, wobei von dem Bereich ein Aktivmaterial entfernt wird.

14. Eine Sekundärbatterie (300), aufweisend;
einen ersten Beschichtungsabschnitt (11) einer ersten Elektrodenplatte;
einen zweiten Beschichtungsabschnitt (12) der ersten Elektrodenplatte;
Separatoren (20, 30), die um den ersten Beschichtungsabschnitt (11) der ersten Elektrodenplatte und den zweiten Beschichtungsabschnitt (12) der ersten Elektrodenplatte herum jeweils auf deren oberem und unterem Abschnitt gestapelt sind;
einen ersten Beschichtungsabschnitt (51) einer zweiten Elektrodenplatte, der gestapelt ist, während er dem ersten Beschichtungsabschnitt (11) der ersten Elektrodenplatte zugewandt ist; und
einen ersten Faltbereich (231), der durch Falten eines Bereichs zwischen dem ersten Beschichtungsabschnitt (11) der ersten Elektrodenplatte und dem zweiten Beschichtungsabschnitt (12) der ersten Elektrodenplatte in einer ersten Richtung ausgebildet ist,
wobei der gefaltete zweite Beschichtungsabschnitt (12) der ersten Elektrodenplatte gestapelt ist, während er dem ersten Beschichtungsabschnitt (51) der zweiten Elektrodenplatte zugewandt ist,
**dadurch gekennzeichnet, dass**
die Sekundärbatterie (300) ferner einen ersten Verbindungsbereich (221), der durch Verbinden der Separatoren (20, 30) zwischen dem ersten Beschichtungsabschnitt (11) der ersten Elektrodenplatte und dem zweiten Beschichtungsabschnitt (12) der ersten Elektrodenplatte ausgebildet ist, aufweist.

15. Die Sekundärbatterie (300) nach Anspruch 14, ferner aufweisend einen zweiten Beschichtungsabschnitt (52) der zweiten Elektrodenplatte, der gestapelt ist, während er dem zweiten Beschichtungsabschnitt (12) der ersten Elektrodenplatte zugewandt ist.

16. Die Sekundärbatterie (300) nach Anspruch 15, ferner aufweisend:
einen dritten Beschichtungsabschnitt (13) der ersten Elektrodenplatte, der gestapelt ist, während er dem zweiten Beschichtungsabschnitt (52) der zweiten Elektrodenplatte zugewandt ist; und
einen zweiten Faltbereich (232), der durch Falten eines Bereichs zwischen dem zweiten Beschichtungsabschnitt (12) der ersten Elektrodenplatte und dem dritten Beschichtungsabschnitt (13) der ersten Elektrodenplatte in einer zweiten Richtung ausgebildet ist, wobei der gefaltete dritte Beschichtungsabschnitt (13) der ersten Elektrodenplatte gestapelt ist, während er dem zweiten Beschichtungsabschnitt (52) der zweiten Elektrodenplatte zugewandt ist.

17. Die Sekundärbatterie (300) nach Anspruch 16, ferner aufweisend einen zweiten Verbindungsbereich (222), der durch Verbinden der Separatoren (20, 30) zwischen dem zweiten Beschichtungsabschnitt (12) der ersten Elektrodenplatte und dem dritten Beschichtungsabschnitt (13) der ersten Elektrodenplatte ausgebildet ist.

18. Die Sekundärbatterie (300) nach Anspruch 14, wobei die erste Richtung und die zweite Richtung voneinander verschieden sind.

19. Die Sekundärbatterie (300) nach Anspruch 17, ferner aufweisend einen dritten Beschichtungsabschnitt (53) der zweiten Elektrodenplatte, der gestapelt ist, während er dem dritten Beschichtungsabschnitt (13) der ersten Elektrodenplatte zugewandt ist.

## Revendications

1. Dispositif d'empilage (100) pour une batterie secondaire, le dispositif d'empilage (100) comprenant :
une partie d'alimentation de corps relié de première électrode plane (140) pour fournir un corps relié de première électrode plane comprenant une première électrode plane, qui comprend une première partie de revêtement de première électrode et une deuxième partie de revêtement de première électrode positionnée pour être espacée de la première partie de revêtement de première électrode, et des séparateurs empilés sur les deux surfaces de la première électrode plane ;
une partie d'alimentation de seconde électrode plane (150) pour agencer une première partie de revêtement de seconde électrode et une deuxième partie de revêtement de seconde électrode d'une seconde électrode plane sur les deux surfaces de la première partie de revêtement de première électrode du corps relié de première électrode plane, respectivement formant ainsi un élément unitaire ; et
une partie de pliage (170) pour plier le corps relié de première électrode plane qui a la pile unitaire formée sur ce dernier, de sorte que la première partie de revêtement de seconde électrode ou la deuxième partie de revêtement de seconde électrode de la seconde électrode plane fait face à la deuxième partie de revêtement de première électrode de la première électrode plane, formant ainsi un élément,
le dispositif d'empilage (100) étant **caractérisé en ce qu'**il comprend en outre :
une partie de liaison de séparateur (220) pour relier les régions de séparateur correspondant aux bords de la première électrode plane dans les séparateurs positionnés sur les deux surfaces de la première électrode plane.

2. Dispositif d'empilage (100) selon la revendication 1, comprenant en outre :
une partie d'alimentation de première électrode plane (110) pour fournir la première électrode plane à la partie d'alimentation de corps relié de première électrode plane (140) ; et
une partie d'alimentation de séparateur (120, 130) pour fournir les séparateurs à la partie d'alimentation de corps relié de première électrode plane (140),
dans lequel le corps relié de première électrode plane est empilé en agençant la première électrode plane et les séparateurs.

3. Dispositif d'empilage (100) selon la revendication 1, dans lequel la première électrode plane du corps relié de première électrode plane est fourni sous une forme continue, et la seconde électrode plane est coupée pour avoir une longueur prédéfinie pour être ensuite agencée sur les deux surfaces du corps relié de première électrode plane.

4. Dispositif d'empilage (100) selon la revendication 1, dans lequel la première électrode plane est coupée pour avoir une longueur prédéfinie pour être ensuite fournie sous une forme indépendante, et la seconde électrode plane est coupée pour avoir une longueur prédéfinie pour être ensuite agencée sur les deux surfaces du corps relié de première électrode plane.

5. Dispositif d'empilage (100) selon la revendication 1, dans lequel la partie de pliage (170) comprend un dispositif de préhension pour comprimer la seconde électrode plane agencée sur les deux surfaces du corps relié de première électrode plane afin de fixer la seconde électrode plane sur le corps relié de première électrode plane, le dispositif de préhension étant fixé sur l'élément unitaire et pliant le corps relié de première électrode plane.

6. Dispositif d'empilage (100) selon la revendication 1, dans lequel la partie de pliage (170) comprend une première partie de pliage (2) et une seconde partie de pliage (3), et la première partie de pliage (2) et la seconde partie de pliage (3) plient, de manière alternée, le corps relié de première électrode plane, qui a l'élément unitaire formé sur ce dernier, formant ainsi l'empilage d'éléments.

7. Dispositif d'empilage (100) selon la revendication 1, comprenant en outre une partie de fixation (180) pour comprimer et fixer l'empilage d'éléments pendant l'opération de pliage réalisée par la partie de pliage (170).

8. Dispositif d'empilage (100) selon la revendication 1, dans lequel la première électrode plane a une région correspondant à une partie incurvée de l'empilage d'éléments, la région de laquelle un matériau actif est retiré.

9. Procédé d'empilage pour une batterie secondaire, le procédé d'empilage comprenant :
une étape d'alimentation de corps relié de première électrode plane (S100) consistant à fournir un corps relié de première électrode plane comprenant une première électrode plane comprenant une première partie de revêtement de première électrode et une deuxième partie de revêtement de première électrode positionnée pour être espacée de la première partie de revêtement de première électrode, et des séparateurs empilés sur les deux surfaces de la première électrode plane ;
une étape d'alimentation de seconde électrode plane (S200) consistant à agencer une première partie de revêtement de seconde électrode et une deuxième partie de revêtement de seconde électrode d'une seconde électrode plane sur les deux surfaces de la première partie de revêtement de première électrode du corps relié de première électrode plane, respectivement, formant ainsi un élément unitaire ; et
une étape de pliage (S300) consistant à plier le corps relié de première électrode plane, qui a l'élément unitaire formé sur ce dernier, de sorte que la première partie de revêtement de seconde électrode ou la deuxième partie de revêtement de seconde électrode de la seconde électrode plane fait face à la deuxième partie de revêtement de première électrode de la première électrode plane, formant ainsi un empilement d'éléments,
**caractérisé en ce qu'**après l'étape d'alimentation de corps relié de première électrode plane (S100), le procédé comprend en outre :
une étape de liaison de séparateur (S121) consistant à relier des régions de séparateur correspondant aux bords de la première électrode plane dans les séparateurs positionnés sur les deux surfaces de la première électrode plane.

10. Procédé d'empilage selon la revendication 9, dans lequel l'étape d'alimentation de corps relié de première électrode plane (S100) comprend :
une étape d'alimentation de première électrode plane (S110) consistant à fournir la première électrode plane ;
une étape d'alimentation de séparateurs (S120) consistant à fournir des séparateurs aux deux surfaces de la première électrode plane ; et
une étape de formation de corps relié de première électrode plane (S130) consistant à former un corps relié de première électrode plane en empilant les séparateurs fournis aux deux surfaces de la première électrode plane.

11. Procédé d'empilage selon la revendication 9, dans lequel la première électrode plane est fournie sous une forme continue à l'étape d'alimentation de corps relié de première électrode plane (S100), et la seconde électrode plane est coupée pour avoir une longueur prédéfinie pour être ensuite agencée sur les deux surfaces du corps relié de première électrode plane à l'étape d'alimentation de seconde électrode plane (S200).

12. Procédé d'empilage selon la revendication 9, dans lequel la première électrode plane est coupée pour avoir une longueur prédéfinie pour être ensuite alimentée sous une forme indépendante à l'étape d'alimentation de corps relié de première électrode plane (S100), et la seconde électrode plane est coupée pour avoir une longueur prédéfinie pour être ensuite agencée sur les deux surfaces du corps relié de première électrode plane à l'étape d'alimentation de seconde électrode plane (S200).

13. Procédé d'empilage selon la revendication 10, dans lequel la première électrode plane de l'étape d'alimentation de première électrode plane (S110) a une région correspondant à une partie incurvée de l'empilement d'éléments, la région de laquelle un matériau actif est retiré.

14. Batterie secondaire (300) comprenant :
une première partie de revêtement (11) de première électrode plane ;
une deuxième partie de revêtement (12) de première électrode plane ;
des séparateurs (20, 30) empilés autour de la première partie de revêtement (11) de première électrode plane et la deuxième partie de revêtement (12) de première électrode plane sur leurs parties supérieures et inférieures, respectivement ;
une première partie de revêtement (51) de seconde électrode plane empilée tout en faisant face à la première partie de revêtement (11) de première électrode plane ; et
une première région de pliage (231) formée en pliant une région entre la première partie de revêtement (11) de première électrode plane et la deuxième partie de revêtement (12) de première électrode plane dans une première direction,
dans laquelle la deuxième partie de revêtement (12) de première électrode plane pliée est empilée tout en faisant face à la première partie de revêtement (51) de seconde électrode plane,
**caractérisée en ce que** :
la batterie secondaire (300) comprend une première région de liaison (221) formée en reliant les séparateurs (20, 30) entre la première partie de revêtement (11) de première électrode plane et la deuxième partie de revêtement (12) de première électrode plane.

15. Batterie secondaire (300) selon la revendication 14, comprenant en outre une deuxième partie de revêtement (52) de seconde électrode plane empilée tout en faisant face à la deuxième partie de revêtement (12) de première électrode plane.

16. Batterie secondaire (300) selon la revendication 15, comprenant en outre :
une troisième partie de revêtement (13) de première électrode plane empilée tout en faisant face à la deuxième partie de revêtement (52) de seconde électrode plane ; et
une seconde région de pliage (232) formée en pliant une région entre la deuxième partie de revêtement (12) de première électrode plane et la troisième partie de revêtement (13) de première électrode plane dans une seconde direction, où la troisième partie de revêtement (13) de première électrode plane pliée est empilée tout en faisant face à la deuxième partie de revêtement (52) de seconde électrode plane.

17. Batterie secondaire (300) selon la revendication 16, comprenant en outre une seconde région de liaison (222) formée en reliant les séparateurs (20, 30) entre la deuxième partie de revêtement (12) de première électrode plane et la troisième partie de revêtement (13) de première électrode plane.

18. Batterie secondaire (300) selon la revendication 14, dans laquelle la première direction et la seconde direction sont différentes l'une de l'autre.

19. Batterie secondaire (300) selon la revendication 17, comprenant en outre une troisième partie de revêtement (53) de seconde électrode plane empilée tout en faisant face à la troisième partie de revêtement (13) de première électrode plane.
